# EUROPÄISCHE PATENTANMELDUNG

(11) **EP 1 221 797 A1**
(43) Veröffentlichungstag der Anmeldung: **10.07.2002**
(21) Anmeldenummer: 01810012.3
(22) Anmeldetag: 05.01.2001
(51) Int. Cl.: H04L 29/06, G06F 9/46, H04L 12/28, H04L 29/12

(54) **Service-informationssystem für einen NetzwerkGateway-Verbund**

(71) Anmelder: ABB RESEARCH LTD., 8050 Zürich (CH)
(72) Erfinder: Holle, Jörg, 5405 Baden-Dättwil (CH); Fabri, Andreas, 06130 Le Plan de Grasse (FR)
(74) Vertreter: ABB Patent Attorneys

(57) **Zusammenfassung**

Die Erfindung ist gerichtet auf ein Service-Informationssystem in einem Netzwerk-Gateway-Verbund mit Netzwerk-Gateways (1, 2) zur Verbindung von Netzwerken und zumindest einem Service-Objekt (4) auf jedem Netzwerk-Gateway (1, 2), welches Programmobjekten (4, 12) in den beiden Netzwerken oder auf dem Netzwerk-Gateway (1, 2) Dienste zur Verfügung stellen kann, wobei das Service-Informationssystem aufweist ein Metaservice-Objekt (5) auf jedem Netzwerk-Gateway (1, 2), welches-über die Service-Objekte (4) dieses Netzwerk-Gateways (1, 2) Informationen empfangen kann und den Programm-Objekten diese Informationen zur Verfügung stellen kann; und zumindest einen Nachrichten-Server (3), welcher Informationen über die auf den einzelnen Netzwerk-Gateways (1, 2) zur Verfügung stehenden Service-Objekte (4) von den einzelnen Metaservice-Objekten (5) empfangen kann und diese Informationen an alle Metaservice-Objekte (5) des Netzwerk-Gateway-Verbunds verteilt. Die Erfindung ist ebenfalls auf ein Verfahren zum Informationsaustausch zwischen Nachrichten-Server (3) und Metaservice-Objekten (5) gerichtet.

## Beschreibung

### Technisches Gebiet

Die vorliegende Erfindung betrifft ein Serviceinformationssystem zum Bereitstellen von Informationen über Dienste auf Gateways in einem Verbund von Gateways.

### Stand der Technik

Zur Verbindung von physikalisch und/oder logisch unterschiedlichen Datenennetzwerken werden sogenannte Gateways verwendet. Gateways dienen der physikalischen und/oder logischen Umsetzung von Daten, die von einem der Netzwerke in das andere Netzwerk transferiert werden sollen. Während klassische Gateways in Computernetzwerken Verwendung finden, beispielsweise bei der Umsetzung von Ethernet-Netzwerken auf externe Netzwerke, die auf Telefontechnik basieren, zum Beispiel das Protokoll ppp für Modemverbindungen über das Telefonnetz, gibt es zahlreiche weitere Anwendungsbereiche, in denen Gateways Verwendung finden. So können beispielsweise Haus-Automatisierungsnetzwerke zu Wartungszwecken mit einer Herstellerfirma verbunden sein, Firmennetze über ADSL-Leitungen mit dem Internet, Schalt- und Verwaltungseinheiten bei Energieversorgern mit einem dedizierten Datennetzwerk des Energieversorgers, oder Sicherungs- und Alarmsysteme mit entsprechenden Vorrichtungen bei Polizei oder Feuerwehr.

Gateways können als autarke Geräte realisiert sein, jedoch auch als Programme, beziehungsweise Betriebssystemkomponenten, auf einer herkömmlichen Datenverarbeitungsanlage, welche zusätzlich die Funktion des Gateway übernimmt, realisiert sein. Auf Grund der zunehmenden Komplexität hinsichtlich der Anforderungen an die Kommunikation in und zwischen Netzwerken, wurden im Laufe der Zeit zusätzliche Funktionalitäten in den Gateways realisiert. Diese werden als Dienste (Services) bezeichnet und resultierten schließlich terminologisch in der Ausprägung von sogenannten Service-Gateway. Als Service wird hierbei ein Programm oder allgemein ein Programmobjekt bezeichnet, das bestimmte, beispielsweise durch das Service-Gateway definierte Schnittstellen realisiert und dessen Funktionalität damit anderen Programmen, die auf dem Service-Gateway oder in einem der Netzwerke laufen, zur Verfügung gestellt wird. Eine häufig bei Service-Gateways implementierte Funktion ist eine definierte Schnittstelle, über die netzweit operierende Anwendungsprogramme, beziehungsweise auch auf dem Gateway implementierte Services, Informationen über die verfügbaren Service abfragen können. Hierunter fallen die Verfügbarkeit bestimmter Services genauso wie deren Arbeitsstatus oder weitere zu ihrem Aufrufen notwendige Informationen. Als zentrale Anlaufstellen sowohl von Netzwerkfunktionen als auch im Rahmen der Bereitstellung der Dienste von im Netzwerk operierenden Programmobjekten kommt den Service-Gateways eine zentrale Bedeutung für die beteiligten Netzwerke zu.

Zur Sicherung der Einheitlichkeit, Interoperabilität und Vielseitigkeit von Service-Gateways hat sich die Open-Services-Gateway-Initiative (OSGi) gegründet, welche einheitliche Frameworks und Schnittstellen für Service-Objekte auf Service-Gateways definieren will. Die von der OSGi definierten Funktionen dienen der Verwaltung und Ausführung von Services auch auf Datenverarbeitungsgeräten mit geringem Speicherplatz. Auch hat die OSGi entsprechende Schnittstellen für Statusabfragen definiert. Durch die Bemühungen um eine Standardisierung können Anbieter von Netzwerkfunktionalitäten solche Funktionalitäten ohne Anpassungsschwierigkeiten und im Vertrauen auf standardisierte Schnittstellen entwickeln. Die OSGi hat sich zum Ziel gesetzt, so unterschiedliche Netzwerktechnologien beziehungsweise Geräteanschlußtechnologien wie BlueTooth (Funk-Standard), den Home Audio and Video Interoperability (HAVi) Standard, Home RF (Funknetz), IEEE-1394, Stromleitungskommunikationssysteme, den universellen seriellen Bus (USB), Funksysteme und andere lokale Netzwerktechnologien zu integrieren und miteinander koppelbar zu machen.

Service-Gateways kommen ursprünglich aus dem Bereich der Heimautomatisierung und sind dort auch als sogenannte Residential-Gateways bekannt. Bei kleineren Installationen ist dabei typischerweise nur ein Service-Gateway installiert, welcher das lokale Netzwerk, beispielsweise das Heimautomatisierungsnetzwerk, mit einem Serviceprovider verbindet.

Bisher übliche Definitionen von Service-Frameworks oder Funktionalitäten von Services ermöglichen lediglich eine sogenannte lokale Sicht auf den aktuellen Status eines Service-Gateways, beziehungsweise der auf ihm implementierten Services.

Mit Ausdehnung des Konzepts von Service-Gateways auf immer neue Anwendungsbereiche wächst auch die Komplexität der Aufgabenstellungen, in die Service-Gateways integriert werden. So kommt man bei der Automation größerer Gebäudekomplexe oder dem Betrieb von Kraftwerken, beziehungsweise Stromverteilungsnetzen, nicht mit einem einzelnen Service-Gateway aus, sondern benötigt häufig eine größere Zahl von Service-Gateways. Auch für verteilte Applikationen konnten bisherige Service-Gateways praktisch nicht eingesetzt werden.

Es stand bislang kein Mechanismus zur Verfügung, der es Anwendungsprogrammen oder Services auf Service-Gateways ermöglichen würde, Informationen über solche Services zu erlangen, die nicht unmittelbar auf dem abgefragten Service-Gateway implementiert waren.

Der Erfindung liegt daher die Aufgabe zugrunde, einen Mechanismus bereitzustellen, mit dessen Hilfe Informationen über auf mehreren Netzwerk-Gateways verfügbaren Services einheitlich abgefragt werden können. Diese Aufgabe wird gelöst durch das globable Service-Informationssystem in einem Netzwerk-Gateway-Verbund gemäß dem unabhängigen Patentanspruch 1 und das Verfahren zur Bereitstellung von Informationen über Dienste von Service-Objekten gemäß dem unabhängigen Anspruch 10. Weitere vorteilhafte Ausgestaltungen, Aspekte und Details der vorliegenden Erfindung ergeben sich aus den abhängigen Patentansprüchen der Beschreibung und der beigefügten Zeichnung.

### Darstellung der Erfindung

Der Erfindung liegt das Prinzip zugrunde, bei einer Mehrzahl von Netzwerk-Gateways (vernetzte Service-Gateways) jeweils einen zentralen Informationsservice einzurichten, der anfragenden Programmen Informationen zur Verfügung stellt, wobei alle diese Metaservices über einen zentralen Nachrichtendienst alle notwendigen Informationen austauschen können.

Die Erfindung ist daher gerichtet auf ein globales Service-Informationssystem in einem Netzwerk-Gateway-Verbund mit zumindest zwei Netzwerk-Gateways zur Verbindung von zumindest zwei Netzwerken und zumindest einem Service-Objekt auf jedem Netzwerk-Gateway, welches Programmobjekten zur Kommunikation zwischen den beiden Netzwerken und/oder Programmobjekten auf dem Netzwerk-Gateway einen oder mehrere Dienste zur Verfügung stellen kann, wobei das Service-Informationssystem aufweist ein Metaservice-Objekt auf jedem Netzwerk-Gateway, welches über die Service-Objekte dieses Netzwerk-Gateways Informationen empfangen kann oder empfängt und den Programmobjekten diese Informationen zur Verfügung stellen kann und zumindest einen Nachrichten-Server, welcher Informationen über die auf den einzelnen Netzwerk-Gateways zur Verfügung stehenden Service-Objekte von den einzelnen Metaservice-Objekten empfangen kann oder empfängt und diese Informationen an alle Metaservice-Objekte des Netzwerk-Gateway-Verbunds verteilen kann oder verteilt.

Unter einem Netzwerk-Gateway ist hierbei, wie oben definiert, eine Vorrichtung zu verstehen, welche eine physikalische und/oder logische Umsetzung von Daten zwischen den mit dem Netzwerk-Gateway verbundenen Netzwerken vermittelt. Ein Verbund von Netzwerk-Gateways ist im Sinne der vorliegenden Erfindung eine Mehrzahl von Gateways, welche zum einen zumindest mit einem gemeinsamen Netzwerk verbunden sind und welche zum anderen alle mit demselben Nachrichten-Server kommunizieren können.

Ein Service-Objekt ist jegliche Funktionalität, welche auf einem Gateway läuft und welche anderen Programmen zur Verfügung gestellt werden kann. Ein Service-Objekt weist Dienste auf, welche diese Programme benutzen können, um ihre eigene Funktionalität zu erweitern, beziehungsweise um in den Netzwerken agieren zu können. Ein Service-Objekt im Sinne der Erfindung kann ein Programm sein oder ein Teilprogramm eines größeren Programms, eine Betriebssystemkomponente, ein Treiber etc.

Service-Objekte werden mit Hilfe eines Framework erstellt, welches für Entwickler einen Kontext zu Verfügung stellt, um den auf dem Gateway auszuführenden Servicecode zu implementieren. Typische Service-Objekte eines Gateways sind beispielsweise ein Logservice, welcher es anderen Services oder Anwendungsprogrammen erlaubt, in eine Logdatei Einträge vorzunehmen, ein Konfigurationsservice, der anfragenden Programmen Informationen zu ihrer Hardware-bezogenen spezifischen Konfiguration liefert oder ein http-Service-Objekt, welche eine Konfiguration des Gateways über einen Web-Browser gestattet.

Wenn in der vorliegenden Erfindung davon gesprochen wird, daß sich ein Objekt *auf* einer Einheit befindet, beispielsweise ein Service-Objekt *auf* einem Netzwerk-Gateway, so bedeutet dies, daß das entsprechende Objekt von der zentralen Recheneinheit der jeweiligen Hardware-Einheit, beispielweise dem Gateway, ausgeführt werden kann, da dieses entweder im Hauptspeicher befindlich ist oder aus einem Massenspeicher von der Zentraleinheit des Gateways aufgerufen werden kann.

Programmobjekte sind jegliche auf Datenverarbeitungsanlagen ablauffähigen Programme, Teilprogramme, Subroutinen, Objekte im Sinne einer objektorientierten Programmierdoktrin etc. Programmobjekte können ebenfalls andere Service-Objekte auf einem Gateway sein, welche ebenfalls Informationen durch das Metaservice-Objekt erlangen können. Programmobjekte können sowohl ausserhalb als auch auf dem Netzwerk-Gateway laufen.

Die erfindungsgemäß verwendeten Informationen, welche das Metaservice-Objekt jedes Gateway, beziehungsweise der Nachrichten-Server, empfangen und aussenden kann, sind Informationen über die auf den Netzwerk-Gateways implementierten Service-Objekte. Beispiele für solche Informationen sind die Verfügbarkeit bestimmter Service-Objekte, welche Dienste Service-Objekte zur Verfügung stellen können, der Status von Service-Objekten, die Ansprechbarkeit von Service-Objekten, beispielsweise hinsichtlich bestimmter Schnittstellen, ein zu verwendendendes Protokoll zum Aufrufen eines auf einem anderen Netzwerk-Gateways lokalisierten Service-Objekts oder die Lokalisierung des bestimmten Service-Objekts auf einem der Netzwerk-Gateways.

Grundsätzlich sind diesen Informationen keine Grenzen gesetzt, da die Metaservice-Objekte und der Nachrichten-Server die Informationen lediglich auf Anfrage unverändert und unbearbeitet weiterreichen beziehungsweise speichern, und so hinsichtlich der Art und Formatierung der Informationen transparent sind.

Die Erfindung stellt also einen neuen Ansatz für die Realisierung einer globalen Sicht auf den aktuellen Status mehrerer Netzwerk-Gateways vor. Mit Hilfe dieser globalen Sicht kann zum Beispiel abgefragt werden, welche Services global oder lokal an bestimmter Stelle aktuell zur Verfügung stehen, wer gerade wo welchen Service benutzt, beziehungsweise allgemein jede Information, die lokal durch jeden der Netzwerk-Gateways zur Verfügung gestellt wird, wie oben beschrieben.

Die vorliegende Erfindung realisiert die globale Sicht auf mehrere Netzwerk-Gateways durch einen speziellen Metaservice, das Metaservice-Objekt, das auf jedem Netzwerk-Gateway gestartet wird. Dieser Service benutzt zur Realisierung der genannten Funktionalität bevorzugterweise Messaging-Technologien. Durch die Verwendung von "Messaging" anstelle von "Polling" (dauernde Abfrage) wird die globale Sicht auf Netzwerk-Gateways ermöglicht, die in beliebiger Zahl und jederzeit dynamisch dem Gesamtsystem hinzugefügt oder aus ihm entfernt werden können, ohne daß das Gesamtsystem zuvor bekannt und entsprechend konfiguriert sein müßte.

Die Erfindung bietet den Vorteil, daß Anwendungsprogramme, die auf bestimmten Datenverarbeitungsanlagen in einem Netzwerk laufen oder auch auf einem Netzwerk-Gateway laufende Service-Objekte nicht mehr so ausgelegt sein müssen, daß sie alle möglicherweise zur Verfügung stehenden Service-Gateways abfragen müssen, sondern es ausreichend ist, sie in gewohnter Manier so zu implementieren, daß sie über eine definierte Schnittstelle bei ihrem lokalen Gateway oder bei einem beliebig bestimmbaren Gateway im Netz eine einzelne Anfrage stellen müssen, die in der Regel mit einer vollständigen, netzweit gültigen Information beantwortet wird.

Dem Nachrichten-Server kommt im erfindungsgemäßen Service-Informationssystem eine zentrale Rolle zu, da er dafür zu sorgen hat, daß alle Metaservice-Objekte, unabhängig vom Zeitpunkt ihres Zuschaltens beziehungsweise Abschaltens vom Gesamtsystem, korrekte Informationen über Service-Objekte auf allen Netzwerk-Gateways erhalten. Da nicht gewährleistet werden kann, daß alle eingehenden Informationen über ein Netzwerk-Gateway, welche von einem Metaservice-Objekt an den Nachrichten-Server gesandt werden, sofort an alle im System befindlichen Metaservice-Objekte weiter gesendet werden können, wird es bevorzugt, daß der Nachrichten-Server einen Zwischenspeicher aufweist, in dem von den einzelnen Metaservice-Objekten empfangenen Informationen für einen vorgegebenen Zeitraum zwischengespeichert werden können. Der vorgegebene Zeitraum kann hierbei auch als unbegrenzt lang gewählt sein.

Neu dem Netzwerk-Gateway-Verbund zugeschaltete Netzwerk-Gateways können somit die zwischengespeicherten Informationen empfangen, wenn der Nachrichten-Server über ihre Anwesenheit informiert worden ist.

Um die neuartigen Metaservice-Objekte in das Gesamtsystem integrieren zu können, ohne Änderungen an den anderen Komponenten des Netzwerk-Gateway vornehmen zu müssen, sollten sinnvollerweise existierende Einrichtungen in der Infrastruktur des Netzwerk-Gateway verwendet werden. Dies kann beispielsweise durch eine Service-Schnittstelle geschehen, welche auch die normalen Service-Objekte aufweisen und mit deren Hilfe sie miteinander und mit dem Netzwerk-Gateway kommunizieren. Eine derartige Schnittstelle kann das Metaservice-Objekt ebenfalls aufweisen, so daß andere Service-Objekte darauf zugreifen können, um Informationen zu gewinnen, die das Metaservice-Objekt zur Verfügung stellt. Alternativ oder zusätzlich kann auch diejenige Schnittstelle des Netzwerk-Gateway verwendet werden, die ebenfalls von anderen Programmen, beispielsweise externen Anwendungsprogrammen oder den normalen Service-Objekten, zur Abfrage von Statusinformationen zum Erhalten der lokalen Sicht auf den Gateway verwendet wird. Bei Implementierung einer speziellen Service-Schnittstelle ist es notwendig, alle anderen Service-Objekte bzw. allgemein alle Objekte, welche auf das Metaservice-Objekt zugreifen, so zu modifizieren, daß sie in der Lage sind, die Service-Schnittstelle anzusprechen. Demgegenüber sind Modifikationen der Objekte bei Verwendung einer Schnittstelle zum Netzwerk-Gateway nicht notwendig, da die Objekte im Stand der Technik bereits entsprechend ausgelegt sind, um lokale Informationen zu gewinnen. Bei dieser Ausführungsform muß allerdings eine neue Möglichkeit der Informationsübertragung zwischen Metaservice-Objekt und Netzwerk-Gateway eingerichtet werden, um Anfragen an das Metaservice-Objekt weiterzuleiten und die vom ihm bereitgestellten Informationen über den Netzwerk-Gateway zu den anfragenden Objekten zurückzuleiten, bzw. muß das Metaservice-Objekt als Bestandteil des Netzwerk-Gateways ausgelegt sein; also z.B. in das Framework des Netzwerk-Gateways integriert sein. Allerdings gestattet die derzeitige Definition von Netzwerk-Gateways nach OSGi eine solche Integration nur beschränkt, in Bezug auf die Fülle der uir Verfügung gestellten Informationen.

Es wird bevorzugt, daß die Metaservice-Objekte eine Service-Schnittstelle zur Verbindung mit dem zumindest einen Service-Objekt aufweisen.

Je nach Ausführung kann die Verbindung zwischen Service-Objekten und dem Metaservice-Objekt also direkt über eine Service-Schnittstelle oder indirekt über die Schnittstelle des Netzwerk-Gateways erfolgen, die auch für lokale Informationen verwendet wird.

Über die Schnittstelle zum Netzwerk-Gateway wird vorzugsweise zudem beim Start des Metaservice-Objekts der aktuelle Stand des lokalen Netzwerk-Gateway und seiner Service-Objekte erfaßt. Ausserdem ermöglicht sie, daß das Metaservice-Objekt dynamisch über neu gestartete und gelöschte Services im lokalen Netzwerk-Gateway informiert wird.

Der aktuelle Stand des Netzwerk-Gateway, beziehungsweise der auf ihm laufenden Service-Objekte und dynamische Änderungen derselben werden durch Nachrichten vom Metaservice-Objekt an den Nachrichten-Server weitergegeben. Dies geschieht einmalig beim Start des Metaservice-Objekts, beziehungsweise dynamisch beim Auftreten von Änderungen. Dabei können die Metaservice-Objekte eine Serverschnittstelle zur Verbindung mit dem Nachrichten-Server über einen Nachrichtenkanal des Nachrichten-Servers aufweisen. Jedes Metaservice-Objekt übernimmt die Rolle eines sogenannten Publishers, welcher Informationen über einen Kanal veröffentlicht. Der dabei benutzte Nachrichtenkanal (Topic) können hierbei ein einzelner Kanal oder zwei Kanäle zum Senden und Empfangen sein. Der Name des Nachrichtenkanals muß dem Metaservice-Objekt bekannt sein, entweder dadurch, daß bei der Konfiguration des Netzwerk-Gateways dessen Bezeichnung (der beispielsweise eine Nummer oder eine Zahl sein kann) mit konfiguriert wird, sei es, daß das Metaservice-Objekt bei seinem Starten einen Broadcastrequest über das Netz abgibt, der von einem zentralen Verwaltungssystem erkannt und mit Zuweisung einer Nachrichtenkanalbezeichnung beantwortet wird. Soll der Nachrichtenkanalbezeichnung vorab konfiguriert werden, wird es bevorzugt, daß das Metaservice-Objekt einen Speicher zum Speichern einer Verbindungsinformation zur Verbindungsaufnahme mit dem Nachrichten-Server aufweist. In diese kann beispielsweise eine IP- und eine Port-Adresse des Nachrichten-Servers eingetragen werden. Der verwendete Nachrichtenkanal kann für alle Netzwerk-Gateways im System identisch sein. Das tatsächliche Format der verwendeten Nachrichten ist für das erfindungsgemäße Prinzip irrelevant, da es von der Implementierung des Metaservice-Objekts abhängig ist.

Das Metaservice-Objekt kann weiterhin einen Logspeicher zum Speichern von Veränderungen an den Informationen über die Dienste oder weitere Informationen aufweisen. Durch das Mitschreiben eines Log können alle aktuell zur Verfügung stehenden Services und deren Benutzer (im Sinn von Applikationen) sowie alle Änderungen an den jeweiligen Informationen erfragt und erfaßt werden, zum Beispiel aus statistischen Gründen.

Desweiteren weist jedes Metaservice-Objekt vorzugsweise einen Speicher zum Speichern der von ihm bereitgestellten Informationen über Service-Objekte auf.

Die verschiedenen Speicher wie Verbindungsinformations-Speicher, Logspeicher und Speicher für Service-Objekte, können hierbei in einem Speicher zusammengefasst sein. Sie können auch Speicherbereiche in einem Haupt- oder Massenspeicher des Netzwerk-Gateways sein.

Programmiertechnisch stehen zahlreiche Möglichkeiten zur Realisierung des erfindungsgemäßen Prinzips der Integration von Metaservice-Objekten und Nachrichten-Servern in einen Netzwerk-Gatewayverbund zur Verfügung. Es wird allerdings insbesondere bevorzugt, daß die Metaservice-Objekte und der Nachrichten-Server mittels eines Messaging-Systems miteinander verbunden werden. So kann dieses Messaging-System beispielsweise mittels des Java-Messaging-Systems realisiert werden. Dies steht im Rahmen der Definition von Netzwerk-Gateways der OSGi standardmäßig auf diesen zur Verfügung und findet sich auch in zahlreichen anderen Systemumgebungen. Es ist speziell für eine netzweite Systemverwaltung konzipiert und erfordert zur Anpassung an das erfindungsgemäße Prinzip nur noch einen vergleichsweise geringen programmiertechnischen Aufwand.

Neben der Vorrichtung zur Realisierung der vorliegenden Erfindung umfasst diese ebenfalls ein Verfahren, mit dem die erfindungsgemäßen Objekte miteinander interagieren können. Die Erfindung ist dabei gerichtet auf ein Verfahren zur Bereitstellung von Informationen über Dienste von Service-Objekten auf einer Mehrzahl von Netzwerk-Gateways eines Netzwerk-Gateway-Verbundes mit folgenden Schritten:
- Gewinnen von Informationen über Service-Objekte auf einem Netzwerk-Gateway durch ein Metaservice-Objekt;
- Übermitteln der gewonnenen Informationen an einen Nachrichten-Server;
- Verteilen der übermittelten Informationen an die anderen Metaservice-Objekte des Netzwerk-Gateway-Verbundes; und
- Bereitstellen der Informationen über alle Service-Objekte der Netzwerk-Gateways des Netzwerk-Gateway-Verbundes durch alle Metaservice-Objekte für Programmobjekte zur Kommunikation zwischen zumindest zwei mittels der Netzwerk-Gateways verbundenen Netzwerke und/oder für Programmobjekte auf dem Netzwerk-Gateway.

Bezüglich der Definitionen, Vorteile und weiterer Aspekte des erfindungsgemäßen Verfahrens wird auf die obige Beschreibung des Service-Informationssystems verwiesen, auf die hinsichtlich des Verfahrens vollinhaltlich Bezug genommen wird.

Das erfindungsgemäße Verfahren ermöglicht unter Verwendung des erfindungsgemäßen Service-Informationssystems die Verteilung von lokal vorhandenen Informationen über Service-Objekte auf einem Netzwerk-Gateway an alle Netzwerk-Gateways, so daß ein Anwendungsprogramm oder ein anderer Service lediglich noch eine Anfrage bei dem lokalen, beim nächstgelegenen, oder bei dem ihm evtl. einzig bekannten Metaservice-Objekt stellen muß, um eine vollständige Information über alle vorhandenen Service-Objekte und sonstigen Gatewayfunktionen innerhalb des gesamten Netzwerk-Gateway-Verbundes zu erhalten.

Das Gewinnen der Informationen über Service-Objekte kann so erfolgen, daß das Metaservice-Objekt gezielt die Informationen über die angebotenen Dienste der Service-Objekte abfragt, sinnvollerweise unter Benutzung existierender Einrichtungen in der Infrastruktur des Netzwerk-Gateways. So ist es möglich, daß das Metaservice-Objekt auf die von jedem Service-Objekt verwendbare, standardisierte Schnittstelle zum Netzwerk-Gateway zugreift. Über diese wird vorzugsweise beim Start des Metaservice-Objekts der aktuelle Stand des lokalen Netzwerk-Gateways erfasst. Zudem kann über diese Schnittstelle das Metaservice-Objekt dynamisch über neu gestartete und gelöschte Service-Objekte im jeweiligen Netzwerk-Gateway informiert werden.

Das Übermitteln der gewonnenen Informationen wird üblicherweise durch ein Nachrichtensystem erfolgen, bei dem Nachrichtenkanäle zwischen den Metaservice-Objekten und dem Nachrichten-Server existieren. Das Verteilen der übermittelten Informationen erfolgt gegebenenfalls über dieselben Nachrichtenkanäle, beziehungsweise denselben Nachrichtenkanal, der zum Übermitteln der gewonnenen Informationen verwendet worden ist. Das Bereitstellen der Informationen durch die Metaservice-Objekte bedeutet, daß diese auf Anfragen durch abfragende Programme die gewünschten Informationen an diese Programme übermitteln. Die Informationen werden in einem Speicher, beispielsweise einem Bereich des Hauptspeichers oder einer Datei auf einer Festplatte des Netzwerk-Gateway für die Metaservice-Objekte abrufbar gespeichert. Das Verfahren kann weiter dadurch gekennzeichnet sein, daß der Nachrichten-Server die übermittelten Informationen zwischenspeichert. Wie bereits oben erläutert, dient dies dazu, auch später eingeschalteten, beziehungsweise in das System eingeklinkten, Metaservice-Objekten Zugriff auf alle Informationen zu gewährleisten, was nicht möglich wäre, wenn Informationen einmal verteilt würden und danach vom Nachrichten-Server nicht mehr abgerufen werden könnten. Um einen Datenaustausch zwischen Metaservice-Objekt und Nachrichten-Server zu erreichen, muß in der Regel eine Verbindung zwischen beiden initialisiert werden, in der die technischen Bedingungen der Kommunikation ausgehandelt werden. Dies kann beispielsweise vorzugsweise dadurch geschehen, daß sich jedes Metaservice-Objekt beim Nachrichten-Server anmeldet, um bei diesem Nachrichten-Server als Sender (Publisher) und Empfänger (subscriber) von Informationen bekannt zu sein.

Das Metaservice-Objekt weist sinnvollerweise die Schnittstellenmechanismen zur Verbindung mit Service-Objekten und Netzwerk-Gateway auf, die bereits oben im Hinblick auf das Serviceinformationssystem beschrieben worden sind. So kann das Metaservice-Objekt (5) jedes Netzwerk-Gateways (1, 2) vorzugsweise eine (Standard-) Schnittstelle des Netzwerk-Gateways (1, 2), welche zugleich von anderen Programmen-Objekten (4, 12), zur Abfrage von Statusinformationen zum Erhalten der lokalen Sicht auf den Gateway verwendet wird, zum Gewinnen der Informationen über die Dienste verwenden. Bei dieser vorteilhaften Ausführungsform des erfindungsgemäßen Verfahrens sind bezüglich der Informationsgewinnung durch das Metaservice-Objekt keine weitergehenden Änderungen an der Struktur des Netzwerk-Gateways notwendig.

Das Verfahren kann weiterhin so ausgelegt sein, daß Änderungen an den Informationen über ein Service-Objekt durch Daten, welche über die Standard-Schnittstelle des Netzwerk-Gateways transportiert werden, vom Metaservice-Objekt erkannt und an den Nachrichten-Server weitergeleitet werden. In diesem Fall werden also Veränderungen an den Informationen durch das Metaservice-Objekt selbständig erkannt. Zur Realisierung dieser Funktionalität kann es notwendig sein, das Metaservice-Objekt beispielsweise als einen Teil des Frameworks des Netzwerk-Gateways zu realisieren.

### Kurze Beschreibung der Zeichnungen:

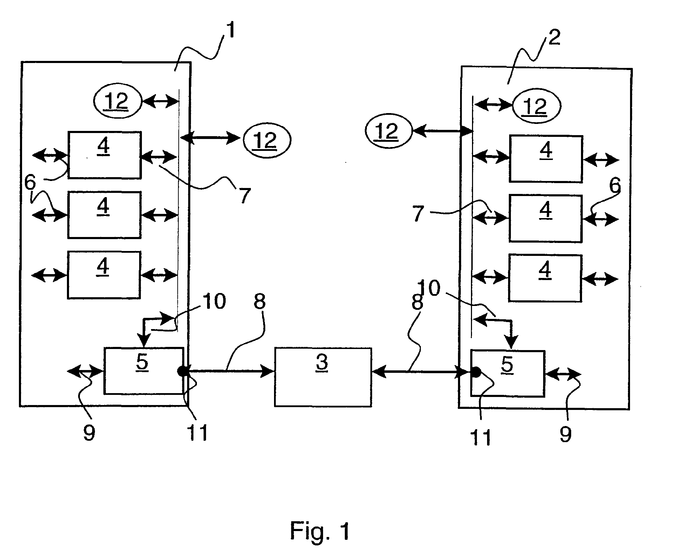

Figur 1 ist eine schematische Darstellung des Serviceinformationssystems der vorliegenden Erfindung, welches auf beispielsweise zwei Netzwerk-Gateways implementiert ist.

### Wege zur Ausführung der Erfindung

Die vorliegende Erfindung stellt einen neuartigen Ansatz zum Bereitstellen von Informationen über Services auf Netzwerk-Gateways dar, bei dem bei Vorhandensein mehrerer Netzwerk-Gateways durch Zugriff auf lediglich einen Gateway eine globale Sicht auf alle Gateways möglich ist. Hierzu dient das erfindungsgemäße Serviceinformationssystem, welches in Figur 1 schematisch dargestellt ist. Die Figur zeigt zwei Netzwerk-Gateways 1, 2, auf denen jeweils mehrere Service-Objekte 4 laufen. Diese können über Schnittstellen 6 mit dem Framework des Netzwerk-Gateways kommunizieren. Die standardisierte Service-Schnittstelle 7 dient der Kommunikation der Service-Objekte untereinander sowie dem Zugriff durch Anwendungsprogramme etc. 12, welche sowohl auf dem Netzwerk-Gateway selbst als auch auf einer anderen Vorrichtung eines der Netzwerke liegen können. Zur Vernetzung und Erzeugung einer globalen Sicht auf die Gateways wird in diesen zukünftigen Verbund von Netzwerk-Gateways das erfindungsgemäße Serviceinformationssystem integriert. Hierzu wird auf jedem der Gateways 1, 2 ein Metaservice-Objekt 5 eingerichtet. Dieses kann zum einen über eine Gateway-Schnittstelle 9 mit dem Netzwerk-Gateway kommunizieren, zum anderen aber auch über eine Service-Schnittstelle 10 mit allen auf dem Netzwerk-Gateway 1 installierten Service-Objekten 4. Die dünne Linie in der Figur 1 stellt dabei die logische Verbindung dar, welche Service-Objekte und Metaservice-Objekt eingehen können, wenn sie die Schnittstellen nutzen. Die Kommunikation der Metaservice-Objekte 5 erfolgt über einen Nachrichten-Server 3.

Die Metaservice-Objekte 5 sind über Serverschnittstellen 11 und Nachrichtenkanäle 8 mit dem Nachrichten-Server 3 verbunden. Durch die spezifische Einbindung der Metaservice-Objekte in das Gesamtsystem können diese sowohl mit den Service-Objekten als auch mit dem Netzwerk-Gateway einerseits und mit Anwendungsprogrammen 12 und dem Nachrichten-Server 3 andererseits kommunizieren. Alle an den Nachrichten-Server 3 weitergeleiteten Informationen über lokal vorhandene Services, werden von diesem an alle Metaservice-Objekte 5 weitergeleitet.
Änderungen an den Informationen, beispielsweise dem Status bestimmter Service-Objekte, im globalen System, also im Netzwerk-Gateway-Verbund, werden automatisch von den Metaservice-Objekten 5 erkannt, da sich diese beim Start beim Nachrichten-Server 3 als Subscriber anmelden. Dabei kann der auch zum Senden von Informationen benutzte Nachrichtenkanal 8 verwendet werden.

Gemäß der empfangenen Informationen aktualisiert das Metaservice-Objekt 5 intern die aktuelle, nach außen zur Verfügung gestellte Sicht auf das globale System. Wie bereits erwähnt, ist das tatsächlich verwendete Format der versendeten Nachrichten für das erfindungsgemäße Prinzip nicht maßgeblich und ist vielmehr von der Implementierung des Metaservice-Objekts 5 abhängig.

Dem Nachrichten-Server 3 kommt bei der Implementierung des erfindungsgemäßen Systems eine besondere Bedeutung bei. Der Nachrichten-Server 3 sorgt für das Verteilen von Nachrichten aller beteiligten Komponenten, wobei bestimmte Qualitätsaspekte Berücksichtigung finden müssen. So stellt der Nachrichten-Server beispielsweise sicher, daß
- keine Nachrichten verloren gehen,
- jede Nachricht an alle Empfänger, das heißt Metaservice-Objekte 5, verteilt wird,
- jede Nachricht für eine gewisse Zeit persistent gespeichert wird, um an neu hinzugefügte Subscriber verteilt zu werden,
- und die zeitliche Reihenfolge von Nachrichten, zumindest bezüglich eines Publishers, d.h. des Metaservice-Objekts 5, erhalten bleibt.

Die verschiedenen Maßnahmen gewährleisten eine möglichst konsistente globale Sicht der beteiligten Komponenten. Bei einer Implementation der Erfindung mittels des Java-Messaging-Systems werden diese Qualtiätsmerkmale durch das System standardmäßig zur Verfügung gestellt.

Das Metaservice-Objekt 5 wird erfindungsgemäß auf jedem der am Verbund beteiligten Netzwerk-Gateways jeweils lokal geladen und gestartet. Hierzu dient der normale Start- und Ausführungsmechanismus des Netzwerk-Gateways, wie er von jedem Service verwendet wird. Ein typisches Anmeldeverfahren des Metaservice-Objekts kann beispielsweise folgendermaßen aussehen:
1. Anmelden als potentieller Sender (Publisher) von Nachrichten beim Nachrichten-Server;
2. Anmelden als potentieller Empfänger (Subscriber) von Nachrichten beim Nachrichten-Server;
3. Erfassen und internes Speichern des aktuellen Status des lokalen Netzwerk-Gateways beziehungsweise der auf ihm laufenden Service-Objekte;
4. Senden der so gewonnenen Informationen über den lokalen Netzwerk-Gateway zum Nachrichten-Server;
5. Senden einer implementierungsabhängigen Anmeldenachricht an den Nachrichten-Server.

Die Schritte 1 und 2 dienen der grundlegenden Initialisierung der verwendeten Infrastruktur, so daß Nachrichten zwischen dem Nachrichten-Server 3 und dem Metaservice-Objekt 5 überhaupt gesendet und empfangen werden können. Durch Schritt 3 wird zunächst eine lokale Sicht des Metaservice-Objekts 5 initialisiert. Schritt 4 sorgt für eine Aktualisierung der Sicht aller anderen beteiligten Metaservice-Objekte. Diese Aktualisierung berücksichtigt auch den Fall, daß das Metaservice-Objekt, beziehungsweise dessen Netzwerk-Gateway, nicht kontrolliert beendet wurde, zum Beispiel wegen eines Absturzes oder Stromausfalls, und nun erneut gestartet wurde. Im allgemeinen findet hier auch ein unter Umständen notwendiges Filtern von veralteten, nicht mehr relevanten Nachrichten statt.

Durch Schritt 5 wird gewährleistet, daß nach einer gewissen Einlaufzeit jedes der Metaservice-Objekte 5 die aktuelle Sicht auf das Gesamtsystem (Verbund von Netzwerk-Gateways) besitzt und diese Information dann an andere lokale Services oder externe Programmobjekte weitergibt. Zu diesem Zweck kann beispielsweise eine "addSGW" Nachricht definiert werden, deren Übersendung bei jeden am Verbund beteiligten Netzwerk-Gateway dazu führt, daß die Metaservice-Objekte einmal Schritt 4 ausführen und damit die für eine globale Sicht notwendigen Informationen über den Nachrichten-Server dem neu hinzugekommenen Metaservice-Objekt zur Verfügung stellen. Die Zeit, die benötigt wird, bis ein neu zugeschaltetes Metaservice-Objekt M vollständig von der lokalen auf die globale Sicht gelangt ist, hängt von der Anzahl der beteiligten Netzwerk-Gateways, der Verbindung zu diesen und weiteren Faktoren ab.

Bei mehr oder minder gleichzeitigem Starten mehrerer Netzwerk-Gateways und damit mehrerer Metaservice-Objekte wird die korrekte globale Sicht aller Netzwerk-Gateways durch den Übermittlungsmechanismus des Nachrichten-Servers gewährleistet.

Beim kontrollierten Beenden führt jedes der Metaservice-Objekte einmal folgende Schritte aus:
1. Senden einer implentierungsabhängigen Abmeldenachricht an den Nachrichten-Server;
2. Abmelden als potentieller Empfänger (Subscriber) von Nachrichten beim Nachrichten-Server;
3. Abmelden als potentieller Sender (Publisher) von Nachrichten beim Nachrichten-Server.

Der erste Schritt, der beispielsweise durch Implementieren einer "removeSGW" Nachricht implementiert werden kann, führt bei allen anderen Netzwerk-Gateways dazu, daß dort gespeicherte Informationen über auf dem sich abmeldenden Netzwerk-Gateway vorhandene lokale Service-Objekte von den jeweiligen Metaservice-Objekten der anderen Netzwerk-Gateways entfernt werden. Die weiteren Schritte dienen dem Abmelden vom Nachrichten-Server, können aber je nach Funktionsweise auch optional sein. Bei Ausfällen eines Netzwerk-Gateways durch unkontrollierten Abbruch ist die globale Sicht der anderen Netzwerk-Gateways kurzzeitig, das heißt bis zum erneuten Start des abgebrochenen Metaservice-Objekts, nicht mehr konsistent. Es hängt von der Anwendung ab, ob das tatsächlich ein Problem darstellt oder nicht. Zum Beispiel wird beim Zugriff auf einen mittlerweile nicht mehr existierenden, auf einem anderen Netzwerk-Gateway lokalisierten Service-Objekt ein Fehler zurückgeliefert. Letztlich wird dann lediglich ein anderer, gleichartiger Service gesucht und gestartet.

Die aktuelle Sicht auf das globale System von Netzwerk-Gateways im Verbund wird anderen lokalen Service-Objekten oder Anwendungsprogrammen durch eine definierte Softwareschnittstelle zur Verfügung gestellt. Die tatsächliche Definition der Softwareschnittstelle ist für das beschriebene Prinzip nicht relevant. Potentiell kann jede in einem Netzwerk-Gateway erfragbare Metainformation zur Verfügung gestellt werden, sofern sie durch das Metaservice-Objekt erfaßt und mit Nachrichten weitergeleitet wird.

Das erfindungsgemäße Informationssystem und das erfindungsgemäße Verfahren ermöglichen erstmalig die transparente Zusammenfassung mehrerer Netzwerk-Gateways zu einem Verbund von Netzwerk-Gateways. Services oder Anwendungsprogramme können auf verfügbare Service-Objekte in einfachster Weise zurückgreifen, ohne zuvor entweder wissen zu müssen, wo das Service-Objekt sich befindet, oder erst alle einzelnen Netzwerk-Gateways abfragen zu müssen. Service-Objekte können feststellen, ob vergleichbare Service-Objekte vorhanden sind und diese in ihrer Leistungsfähigkeit bündeln, beispielsweise indem die Bandbreite von Telekommunikationswegen vergrößert wird.

Die vorliegende Erfindung ermöglicht damit in einfachster Weise die Realisierung auch komplexer Netzwerkaufbauten, beispielsweise im industriellen Bereich.

### Bezugszeichenliste

- 1, 2: Netzwerk-Gateways
- 3: Nachrichten-Server
- 4: Service-Objekte
- 5: Metaservice-Objekte
- 6: Schnittstellen der Service-Objekte zum Gateway
- 7: Service-Schnittstellen der Service-Objekte
- 8: Nachrichtenkanal zwischen Metaservice-Objekt und Nachrichten-Server
- 9: Gateway-Schnittstelle zum Netzwerk-Gateway
- 10: Service-Schnittstelle des Metaservice-Objekts
- 11: Server-Schnittstelle
- 12: Andere Programmobjekte

## Patentansprüche

1. Globales Service-Informationssystem in einem Netzwerk-Gateway-Verbund mit zumindest zwei Netzwerk-Gateways (1, 2) zur Verbindung von zumindest zwei Netzwerken und zumindest einem Service-Objekt (4) auf jedem Netzwerk-Gateway (1, 2), welches Programmobjekten (12) in den beiden Netzwerken und/oder Programmobjekten (4) auf dem Netzwerk-Gateway (1, 2) einen oder mehrere Dienste zur Verfügung stellen kann, wobei das Service-Informationssystem aufweist
ein Metaservice-Objekt (5) auf jedem Netzwerk-Gateway (1, 2), welches über die Service-Objekte (4) dieses Netzwerk-Gateways (1, 2) Informationen empfangen kann oder empfängt und den Programm-Objekten (4, 12) diese Informationen zur Verfügung stellen kann; und
zumindest einen Nachrichten-Server (3), welcher Informationen über die auf den einzelnen Netzwerk-Gateways (1, 2) zur Verfügung stehenden Service-Objekte (4) von den einzelnen Metaservice-Objekten (5) empfangen kann oder empfängt und diese Informationen an alle Metaservice-Objekte (5) des Netzwerk-Gateway-Verbunds verteilen kann oder verteilt.

2. Service-Informationssystem nach Anspruch 1, **dadurch gekennzeichnet, daß** der Nachrichten-Server (3) einen Zwischenspeicher aufweist, in dem von den einzelnen Metaservice-Objekten (5) empfangene Informationen für einen vorgegebenen Zeitraum zwischengespeichert werden können.

3. Service-Informationssystem nach Anspruch 1 oder 2, **dadurch gekennzeichnet, daß** die Metaservice-Objekte (5) eine Service-Schnittstelle (10) zur Verbindung mit dem zumindest einen Service-Objekt (4) des Netzwerk-Gateways (1, 2) aufweisen.

4. Service-Informationssystem nach einem der Ansprüche 1 bis 3, **dadurch gekennzeichnet, daß** die Metaservice-Objekte (5) eine Server-Schnittstelle zur Verbindung mit dem Nachrichten-Server (3) über einen Nachrichtenkanal (8) des Nachrichten-Servers (3) aufweisen.

5. Service-Informationssystem nach einem der Ansprüche 1 bis 4, **dadurch gekennzeichnet, daß** die Metaservice-Objekte (5) eine Gateway-Schnittstelle (9) zur Verbindung mit dem Netzwerk-Gateway (1, 2) aufweisen.

6. Service-Informationssystem nach Anspruch 5, **dadurch gekennzeichnet, daß** die Gateway-Schnittstelle (9) mit einer Schnittstelle des Netzwerk-Gateways (1, 2) verbunden ist, welche von allen Service-Objekten (4) auf dem Netzwerk-Gateway (1, 2) verwendet wird.

7. Service-Informationssystem nach einem der Ansprüche 1 bis 6, **dadurch gekennzeichnet, daß** das Metaservice-Objekt (5) einen Speicher zum Speichern einer Verbindungsinformation zur Verbindungsaufnahme mit dem Nachrichten-Server (3) aufweist.

8. Service-Informationssystem nach einem der Ansprüche 1 bis 7, **dadurch gekennzeichnet, daß** das Metaservice-Objekt (5) einen Log-Speicher zum Speichern von Veränderungen an den Informationen über die Dienste aufweist.

9. Service-Informationssystem nach einem der Ansprüche 1 bis 8, **dadurch gekennzeichnet, daß** die Verbindung der Metaservice-Objekte (5) und der Nachrichten-Server (3) mittels eines Messaging Systems realisiert sind.

10. Verfahren zur Bereitstellung von Informationen über Dienste von Service-Objekten (4) auf einer Mehrzahl von Netzwerk-Gateways (1, 2) eines Netzwerk-Gateway-Verbundes mit folgenden Schritten:
- Gewinnen von Informationen über Service-Objekte (4) auf einem Netzwerk-Gateway (1, 2) durch ein Metaservice-Objekt (5);
- Übermitteln der gewonnen Informationen an einen Nachrichten-Server (3);
- Verteilen der übermittelten Informationen an die anderen Metaservice-Objekte (5) des Netzwerk-Gateway-Verbundes; und
- Bereitstellen der Informationen über alle Service-Objekte (4) der Netzwerk-Gateways (1, 2) des Netzwerk-Gateway-Verbundes durch alle Metaservice-Objekte (5) für Programmobjekte (12) in zumindest zwei, mittels der Netzwerk-Gateways (1, 2) verbundenen Netzwerken und/oder für Programmobjekte (4, 12) auf dem Netzwerk-Gateway (1, 2).

11. Verfahren nach Anspruch 10, **dadurch gekennzeichnet, daß** der Nachrichten-Server (3) die übermittelten Informationen zwischenspeichert.

12. Verfahren nach Anspruch 10 oder 11, **dadurch gekennzeichnet, daß** sich jedes Metaservice-Objekt (5) beim Nachrichten-Server (3) anmeldet, um bei diesem Nachrichten-Server (3) als Sender und Empfänger von Informationen bekannt zu sein.

13. Verfahren nach einem der Ansprüche 10 bis 12, **dadurch gekennzeichnet, daß** das Metaservice-Objekt (5) jedes Netzwerk-Gateways (1, 2) eine Schnittstelle des Netzwerk-Gateways (1, 2), welche zugleich von anderen Programmen-Objekten (4, 12), zur Abfrage von Statusinformationen zum Erhalten der lokalen Sicht auf den Gateway verwendet wird, zum Gewinnen der Informationen über die Dienste verwendet.
